# EUROPÄISCHE PATENTSCHRIFT

(11) **EP 3 102 308 B1**
(45) Veröffentlichungstag und Bekanntmachung des Hinweises auf die Patenterteilung: **14.10.2020**
(21) Anmeldenummer: 15703451.3
(22) Anmeldetag: 29.01.2015
(51) Int. Cl.: B01D 53/00, B01D 53/04, C01B 3/56, C10K 1/00, F25J 3/06, C10K 1/32, C10K 3/00

(54) **VERFAHREN ZUM ERZEUGEN UND REINIGEN EINES SYNTHESEGASES**
METHOD FOR GENERATING AND PURIFYING A SYNTHESIS GAS
PROCÉDÉ DE PRODUCTION ET DE NETTOYAGE D'UN GAZ DE SYNTHÈSE

(30) Priorität: 04.02.2014 EP 14000398
(43) Veröffentlichungstag der Anmeldung: 14.12.2016
(73) Patentinhaber: Linde GmbH, 82049 Pullach (DE)
(72) Erfinder: LANG, Martin, 80689 München (DE); VOSS, Christian, 82538 Geretsried (DE); SCHÜRER, Benedikt, 82049 Pullach (DE); SALAZAR DUARTE, Gabriel, 80336 München (DE)
(74) Vertreter: Lu, Jing
(86) Internationale Anmeldenummer: PCT/EP2015/000170
(87) Internationale Veröffentlichungsnummer: WO 2015/117737

(56) Entgegenhaltungen:
- EP-A2- 0 130 284
- WO-A1-2008/143966
- US-A1- 2011 207 836
- US-B1- 8 128 735

## Beschreibung

Die Erfindung betrifft ein Verfahren zum Erzeugen bzw. Reinigen eines Synthesegases aufweisend CO sowie zumindest H₂, CO₂, CH₄, H₂O und ggf. N₂. Das Synthesegas wird gemäß Stand der Technik mittels Dampfreformierung bzw. partieller Oxidation erzeugt. Um den CO-Gehalt im Synthesegas zu erhöhen kann CO₂, das aus dem Synthesegas abgetrennt wird, vor die Gaserzeugung als Edukt zurückgeführt werden.

Im Stand der Technik sind Temperaturwechseladsorptionsverfahren (TSA = Temperature Swing Adsorption) bekannt. Diese werden industriell bisher hauptsächlich zur Entfernung von Spurenkomponenten (weniger als 1 Vol.-%) aus Gasgemischen verwendet. Für das TSA-Verfahren werden in der Regel zumindest zwei mit adsorptivaktivem Material (auch als Adsorbens bezeichnet) gefüllte Behälter (Adsorber) genutzt, die wechselweise betrieben werden. Während sich ein Behälter in Adsorption befindet, wird der andere Behälter mit heißem Regeneriergas durchströmt und somit per direkter Wärmeübertragung, d.h., das Regeneriergas kontaktiert das Adsorbens, aufgeheizt. Die Adsorptionskapazität des Adsorbens sinkt mit steigender Temperatur, sodass es zur Desorption der zurückgehaltenen Komponenten kommt. Die desorbierten Komponenten werden durch das Regeneriergas verdünnt und aus dem Adsorber gespült. Die Verwendung von Regeneriergas bewirkt zusätzlich eine Herabsetzung des Partialdrucks der adsorbierten Komponente in der Gasphase und begünstigt somit die Desorption der zurückgehaltenen Spurenkomponenten. Die Aufheizzeiten und Abkühlzeiten werden meist durch die zur Verfügung stehende beziehungsweise einsetzbare Menge an Regeneriergas begrenzt und liegen typischerweise im Bereich mehrerer Stunden (regelmäßig mehr als drei Stunden). Hieraus ergeben sich Zykluszeiten von meist deutlich mehr als sechs Stunden.

Bei der kryogenen Trennung eines CO und H₂-haltigen Synthesegases bzw. Oxogases zur Erzeugung eines Kohlenmonoxid- bzw. Wasserstoffproduktes (hierbei wird z.B. CO kondensiert und von H₂ abgetrennt) muss Kohlenstoffdioxid und Wasser sowie ggf. Methanol aus dem Gasstrom entfernt werden, um das Ausfrieren dieser Komponenten im nachfolgenden kalten Teil der Anlage zu verhindern. Für die Entfernung größerer Mengen an Kohlenstoffdioxid werden meist absorptive Verfahren, sogenannte Wäschen (zum Beispiel ein Amin- oder Rectisol-Wäsche), eingesetzt. Nach der Wäsche enthält das Synthesegas meist noch Spuren von Kohlenstoffdioxid (z.B. weniger als 50 Vol.-ppm) und ist mit dem wasser- bzw. methanolhaltigen Waschmittel gesättigt. Vor der kryogenen Verflüssigung werden Kohlenstoffdioxid und Wasser beziehungsweise Methanol daher üblicherweise durch ein TSA-Verfahren abgetrennt um ein Ausfrieren in der kryogenen Trennung zu verhindern.

In der EP 1 291 067 A2 wird ein Rapid-TSA-Verfahren basierend auf einem Wärmeüberträger zur Entfernung von Spuren von Kohlenstoffdioxid und Wasser beschrieben. Hierin wird ein Verfahren zur Feinreinigung von Synthesegas beschrieben.

In US20110207836A1 wird ein Verfahren zum Reinigen von Synthesegas mittels TSA offenbart. Die im Synthesegas enthaltende CO2 wird durch TSA entfernt und die aus TSA desorbierte CO2 wird in eine PSA geführt und dort weiterbehandelt.

EP0130284 offenbart auch ein Verfahren zum Reinigen von Synthesegas, in dem das Gas via einen Kompressor in einen Adsorber zur Entfernung von CO2 geleitet wird. Die entfernte CO2 wird mit Regeneriergas über eine Leitung abgegeben.

WO2008143966A1 und US8128735B1 offenbaren beide eine Rapid TSA, bei dem das Adsorbens mittels indirekt Wärmeübertragung vom Adsorbens gekühlt oder geheizt wird, um den Adsorbat zu desorbieren und auch zu adsorbieren.

Im Stand der Technik ist nicht bekannt, wie diesbezüglich eine große Menge Kohlenstoffdioxid und insbesondere auch Wasser oder Methanol abgeschieden werden können (so genannte Bulk-Abscheidung). Üblicherweise wird daher z.B. 10 Vol.-% CO₂ des Synthesegases aus einem Reformer in einer herkömmlichen Wäsche bis auf weniger als 50 Vol.-ppm entfernt, wobei dann in einer herkömmlichen TSA (also Regeneration des Adsorbens mittels direkter Wärmeübertragung durch Beaufschlagen des beladenen Adsorbens mit heißem Regeneriergas) der CO₂-Gehalt auf weniger als 0,1 Vol.-ppm reduziert wird. Weitere Nachteile des bisherigen Prozesses (Wäsche sowie anschließende TSA) bestehen in den vergleichsweise hohen Investitionskosten, dem vergleichsweise hohen apparativen Aufwand sowie in dem Umstand, dass es sich um zwei separate Trennprozesse handelt.

Die hier geschilderten Nachteile aus dem vorbekannten Stand der Technik werden mit der im Folgenden beschriebenen Erfindung zumindest teilweise gelöst. Die erfindungsgemäßen Merkmale ergeben sich aus den unabhängigen Ansprüchen, zu denen vorteilhafte Ausgestaltungen in den abhängigen Ansprüchen aufgezeigt werden. Die Merkmale der Ansprüche können in jeglicher technisch sinnvollen Art und Weise kombiniert werden, wobei hierzu auch die Erläuterungen aus der nachfolgenden Beschreibung sowie Merkmale aus den Figuren hinzugezogen werden können, die ergänzende Ausgestaltungen der Erfindung umfassen.

Gemäß Anspruch 1 ist erfindungsgemäß vorgesehen, dass CO2, das mit einer Konzentration im Bereich von 5 Vol.-% bis 30 Vol.-% im erzeugten Synthesegasstroms vorliegt, mittels einer Temperaturwechseladsorption aus dem Synthesegasstrom stromauf der kryogenen Abtrennung von CO auf weniger als 10 Vol.-ppm abgereichert wird, wobei CO₂ an einem Adsorbens (das insbesondere in Form einer regellosen Adsorbensschüttung vorliegt) adsorbiert wird, und wobei das Adsorbens beim Adsorbieren von CO2 mittels indirekter Wärmeübertragung vom Adsorbens auf das Wärmeträgermedium gekühlt wird und das mit CO₂ beladene Adsorbens zur Desorption von CO₂ zumindest teilweise (insbesondere lediglich) durch indirekte Wärmeübertragung von einem fluiden Wärmeträgermedium auf das Adsorbens erwärmt wird (eine solche Temperaturwechseladsorption wird auch als RTSA für Rapid Temperature Swing Adsorption bezeichnet).

Das erfindungsgemäße Verfahren ist insbesondere geeignet für Abscheidung von CO2 aus erzeugten Synthesegas mit einer Konzentration von 5 Vol.-% bis 30 Vol.-%. Der CO2 enthaltende Einsatzstrom wird durch RTSA vor der kryogenen Trennung von CO auf weniger als 10 Vol.-ppm, insbesondere weniger als 1 Vol.-ppm, noch insbesondere weniger als 0,1 Vol.-ppm abgetrennt. Das heißt, dass zumindest 99,98 Vol.-%
des im Synthesegas enthaltenen CO2 abgetrennt wird. Diese hohe Abtrennung wird dadurch erreicht, dass das Adsorbens während der Adsorption des CO2 mittels des Wärmeträgermediums gekühlt wird, so dass das Adsorbens nicht durch die Adsorptionswärme immer weiter erwärmt wird und der Adsorptionsvorgang bei einer relativ niedrigen Temperatur effizient laufen kann.

Zur Synthesegaserzeugung sind viele Verfahren bekannt z.B. wie Dampfreformierung von Kohlenwasserstoff insbesondere CH4 oder partielle Oxidation von Erdgas. Daneben besteht noch die Möglichkeit, das Synthesegas durch autotherme Reformierung oder Trockenreformierung zu erzeugen. Das erfindungsgemäße Verfahren ist nicht auf einzelne Synthesegaserzeugungsverfahren beschränkt, das gilt auch für die Kombinationen wie Reihen- oder Parallelschaltung von den geeigneten Verfahren, insofern die Erzeugung des Synthesegases erzielt wird.

Die Erfindung sieht also vor, ein Rapid-Temperaturwechsel-Adsorptionsverfahren (RTSA) zu verwenden, das insbesondere vergleichsweise kurze Zykluszeiten(vorzugsweise 1 bis 4 Stunden) aufweist, für die Abscheidung von zumindest CO₂ sowie insbesondere auch Wasser und/oder Methanol einzusetzen. Das Aufheizen und Kühlen des Adsorbens erfolgt dabei indirekt, und zwar bevorzugt durch ein mit einer Trennwand separiertes Wärmeträgermedium bzw. Thermofluid anstelle eines das Adsorbens direkt beströmenden Regeneriergases, wie es bei einem herkömmlichen TSA-Verfahren der Fall ist. Es ist somit möglich die besagte Wäsche zur CO₂-Entfernung und auch das gegebenenfalls stromabwärts nachgeschaltete herkömmliche TSA-Verfahren durch ein einzelnes Rapid-TSA-Verfahren bzw. eine entsprechende Anlage mit indirekter Wärmeübertragung und insbesondere vergleichsweise kurzen Zykluszeiten zu ersetzen.

Gemäß einer weiteren vorteilhaften Ausführungsform des Verfahrens wird das Kohlenstoffdioxid unter Überdruck im Bereich von 10 bar bis 50 bar, bevorzugt von 15 bar bis 40 bar bei der erfindungsgemäßen rapiden Temperaturwechseladsorption (RTSA) vom Synthesegasstrom abgeschieden und insbesondere mit geringen, bevorzugt allein strömungstechnisch bedingten Druckverlusten, in die Synthesegaserzeugung zurückgeführt.

Gegenüber dem Stand der Technik hat das hier vorgeschlagene Verfahren nicht nur den Vorteil, dass die besagte Wäsche zur Bulk-Entfernung von CO₂ eingespart werden kann, sondern es kann darüber hinaus der Leitungsdruck aufrechterhalten werden. Damit kann das Kohlenstoffdioxid ohne größeren Aufwand, zum Beispiel mit vergleichsweise weniger Kompressionsstufen oder sogar nur mit einem Gebläse, in die Synthesegaserzeugung zurückgeführt werden.

Gemäß einer weiteren vorteilhaften Ausführungsform des Verfahrens ist dem erfindungsgemäß verwendeten RTSA das herkömmliche Temperaturwechseladsorptionsverfahren zur Feinsäuberung des Synthesegases von CO₂ sowie insbesondere H₂O und/oder Methanol nachgeschaltet.

Mit dem nachgeschalteten TSA-Verfahren können noch Spurenkomponenten entfernt werden. Damit kann das vorgeschaltete Rapid-TSA-Verfahren allein auf die Bulk-Abscheidung ausgelegt werden, wobei dann eventuell überströmende Restbestandteile im nachfolgenden TSA-Verfahren abgeschieden werden können.

Bevorzugt ist insbesondere eine Ausführungsform der Erfindung, bei der im Synthesegas enthaltenes CO₂ mittels der RTSA im Wesentlichen vollständig bis auf weniger als 1Vol.-ppm entfernt wird, wobei noch im Synthesegas verbliebenes CO₂ mittels einer herkömmlichen TSA abgereichert wird, insbesondere auf zumindest 0,1 Vol.-ppm oder weniger als 0,1 Vol.-ppm.

Bei einer solchen Verschaltung (erst RTSA dann TSA) kann das Adsorbens mit Vorteil noch besser ausnutzt werden, so dass die RTSA kleiner ausfallen kann. Bei einer RTSA die CO₂ von z.B. 10 Vol.-% auf 0.1 Vol.-ppm abreichert, würde ein Teil des Adsorbens weitestgehend ungenutzt bleiben

Gemäß einem weiteren Aspekt der Erfindung wird eine Anlage vorgeschlagen, die zumindest aufweist:
- eine Einheit zur Erzeugung eines Synthesegasstromes;
- stromabwärts der Synthesegaserzeugung zumindest einen Temperaturwechseladsorber mit einem Adsorbens in Form einer regellosen Adsorbensschüttung zum Adsorbieren von CO₂ (sowie insbesondere H₂O und/oder Methanol) aus dem Synthesegasstrom, wobei der Temperaturwechseladsorber dazu ausgebildet ist, das Adsorbens durch indirekte Wärmeübertagung der Wärme eines fluiden Wärmeträgermediums auf das Adsorbens zu regenerieren, wobei CO₂ vom Adsorber desorbiert wird,
- stromabwärts des Temperaturwechseladsorbers eine kryogene Trenneinheit, die dazu ausgebildet ist Kohlenmonoxid kryogen (z.B. durch Kondensation) aus dem Synthesegasstrom abzutrennen;
- eine Rückführleitung (insbesondere mit Gebläse) vom Temperaturwechseladsorber zur Synthesegaserzeugung, die zum Rückführen des desorbierten in die Synthesegaserzeugung ausgebildet ist; sowie
- insbesondere stromabwärts des Temperaturwechseladsorbers einen Druckwechseladsorber zum Abscheiden von Wasserstoff aus dem Synthesegasstrom.

Bevorzugt ist diese Synthesegasanlage zur Ausführung des oben genannten Verfahrens eingerichtet. Eine Gaswäsche, zum Beispiel eine Amin-Wäsche oder Rectisol-Wäsche, ist wiederum nicht notwendig bzw. insbesondere ausdrücklich nicht vorgesehen. Vielmehr ersetzt der besagte Temperaturwechseladsorber die Gaswäscheeinheit (siehe oben). Mittels der Rückführleitung wird der Synthesegaserzeugung das Kohlenstoffdioxid als Edukt zugeführt. Dabei sind im Gegensatz zu vorbekannten Anlagen keine aufwendigen Kompressionsstufen notwendig, da das CO₂ in dem besagten Temperaturwechseladsorber auf hohem Druck (siehe oben) zurückgewonnen werden kann. Somit treten lediglich strömungstechnisch bedingte Druckverluste auf (zum Beispiel Rohrreibungsverluste), die bereits durch ein (einfaches) Gebläse ausgeglichen werden können. Damit wird die Rückführung vereinfacht und wirtschaftlicher gestaltet. Gemäß einer weiteren vorteilhaften Ausführungsform der Synthesegasanlage ist stromabwärts des besagten Temperaturwechseladsorbers ein herkömmlicher Temperaturwechseladsorber nachgeschaltet, der sein Adsorbens zum Regenerieren mit einem heißen Regeneriergas beaufschlägt (siehe oben). Mit diesem nachgeschalteten, einfachen Temperaturwechseladsorber zum Ausführen des herkömmlichen TSA-Verfahrens können noch Spurenkomponente an CO₂ entfernt werden. Damit kann der besagte Temperaturwechseladsorber allein auf die Bulk-Abscheidung ausgelegt werden, wobei dann eventuell überströmende Restbestandteile im nachfolgenden herkömmlichen Temperaturwechseladsorber abgeschieden werden können.

Mit dem hier vorgeschlagenen Verfahren und der hier vorgeschlagenen Synthesegasanlage ist eine wirtschaftlichere Synthesegasherstellung möglich, bei der keine Gaswäsche notwendig ist.

Die oben beschriebene Erfindung wird nachfolgend vor dem betreffenden technischen Hintergrund unter Bezugnahme auf die zugehörigen Zeichnungen, die bevorzugte Ausgestaltungen zeigen, detailliert erläutert. Die Erfindung wird durch die rein schematischen Zeichnungen in keiner Weise beschränkt, wobei anzumerken ist, dass die Zeichnungen nicht maßhaltig sind und zur Definition von Größenverhältnissen nicht geeignet sind. Es wird dargestellt in
- Fig. 1:: ein Blockdiagramm eines aus dem Stand der Technik bekannten Verfahrens zur Erzeugung/Reinigung eines Synthesegases;
- Fig. 2:: ein Blockdiagramm einer ersten Ausführungsform des erfindungsgemäßen Verfahrens bzw. der erfindungsgemäßen Synthesegasanlage; und
- Fig. 3:: ein Blockdiagramm einer zweiten Ausführungsform des erfindungsgemäßen Verfahrens bzw. der erfindungsgemäßen Synthesegasanlage.

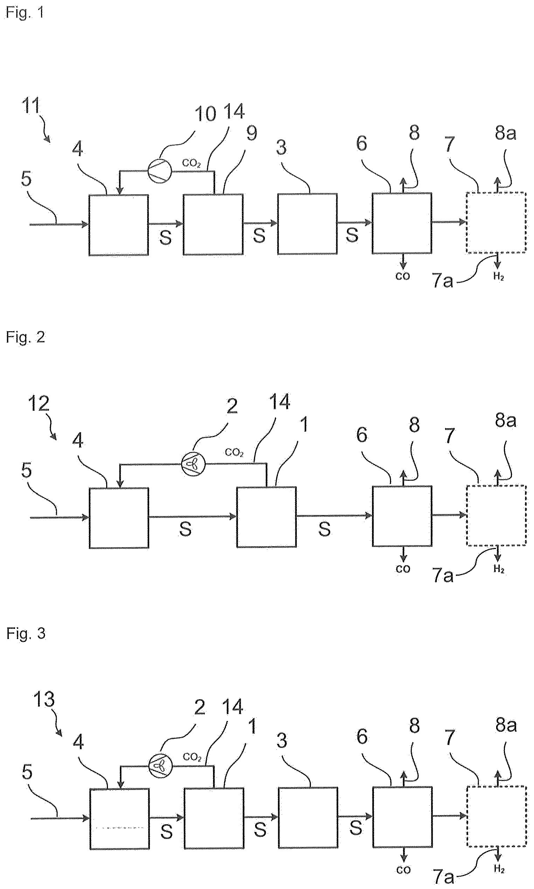

In Fig. 1 ist eine konventionelle Synthesegasanlage 11 dargestellt, bei der zunächst ein kohlenwasserstoffhaltiger Einsatz 5 (z.B. Erdgas) in einer Einheit zur Synthesegaserzeugung in einen Synthesegasstrom S, der zumindest CO und H₂ sowie CH₄ und ggf. Spuren von N₂ enthält, umgesetzt wird. Das Synthesegas S wird einer Wäsche 9 zugeführt, bei der und Wasser abgeschieden werden. Anschließend werden in einem herkömmlichen Temperaturwechseladsorber 3, bei dem zum Regenerieren des Adsorbens ein heißes Regeneriergas mit dem Adsorbens kontaktiert wird, um eine direkte Wärmeübertragung auf das Adsorbens durchzuführen, Spurenkomponenten an CO₂ und ggf. Wasser bzw. Methanol aus dem Synthesegasstrom S abgetrennt. Schließlich werden in einer kryogenen Trenneinheit (auch als Cold Box bezeichnet) 6 Kohlenmonoxid und ggf. ein Tailgas 8 (enthaltend z.B. CO, CH₄ sowie ggf. H₂ und N₂) vom Synthesegasstrom S abgetrennt. Stromab werden des Weiteren in einem Druckwechseladsorber 7 per Druckwechseladsorption Wasserstoff 7a sowie ein Tailgas 8a (enthaltend z.B. CO, CH₄ sowie ggf. H₂ und N₂) vom Synthesegasstrom S abgetrennt. Weiterhin wird das in der Wäsche 9 abgeschiedene Kohlenstoffdioxid über die Rückführleitung 14 in die Synthesegaserzeugung 4 rezirkuliert, wobei wegen des notwendigen Druckabfalls für die Wäsche 9 ein mehrstufiger Kompressor 10 notwendig ist. Mit dieser konventionellen Synthesegasanlage wird der Kohlenstoffdioxid mit einer Konzentration von 10 Vol.-% bis auf weniger als 50 Vol.-ppm von dem Synthesegasstrom abgereichert.

In Fig. 2 ist eine erste Ausführungsform eines erfindungsgemäßen Verfahrens bzw. einer entsprechenden Anlage 12 gemäß der obigen Beschreibung dargestellt. Hierbei werden die Wäsche 9 und der herkömmliche Temperaturwechseladsorber 3 (siehe Fig. 1) durch einen Rapid-Temperaturwechseladsorber 1 ersetzt, der allein in der Lage ist, eine große Menge an Kohlenstoffdioxid und Wasser abzutrennen. Bei der Temperaturwechseladsorption 1 wird das Adsorbens in Form einer regellosen Schüttung regeneriert, indem dieses per indirekte Wärmeübertragung erhitzt wird. Die Wärme wird dabei durch ein räumlich vom Adsorbens getrenntes, fluides Wärmeträgermedium bereitgestellt. Das auf hohem Gasdruck solchermaßen zurückgewonnene Kohlenstoffdioxid kann so gleich rezirkuliert werden, wobei lediglich ein Gebläse 2 den lediglich strömungstechnisch bedingten Druckverlust ausgleicht. Mit diesem Verfahren wird der Kohlenstoffdioxid mit einer Konzentration von z.B. 5 Vol.- % bis 30 Vol.- % bis auf weniger als 10 Vol,-ppm, insbesondere auf zumindest 0,1 Vol.-ppm oder weniger als 0,1 Vol.-ppm. von dem Synthesegasstrom abgetrennt.

In Fig. 3 ist eine zweite Ausführungsform eines erfindungsgemäßen Verfahrens bzw. einer erfindungsgemäßen Synthesegasanlage 13 gezeigt, die der Synthesegasanlage 12 in der Fig. 2 ähnelt. Hierbei ist dem Rapid-Temperaturwechseladsorber 1 noch ein zusätzlicher herkömmlicher Temperaturwechseladsorber 3 nachgeschaltet, der per direkter Wärmeübertragung (siehe oben) regeneriert wird und die Abscheidung von Spurenkomponenten an CO₂ und ggf. Wasser übernimmt.

### Bezugszeichenliste

| | |
|---|---|
| 1 | Temperaturwechseladsorber (RTSA) |
| 2 | Gebläse |
| 3 | Temperaturwechseladsorber (TSA) |
| 4 | Reaktor bzw. Synthesegaserzeugung |
| 5 | Einsatz |
| 6 | Cold Box bzw. kryogene Trenneinheit |
| 7 | Druckwechseladsorber |
| 7a | Rohwasserstoffstrom |
| 8, 8a | Tailgas |
| 9 | Wäsche zur CO₂-Entfernung |
| 10 | mehrstufiger Kompressor |
| 11 | konventionelle Synthesegasanlage |
| 12 | erste Synthesegasanlage |
| 13 | zweite Synthesegasanlage |
| 14 | Rückführleitung |
| S | Synthesegasstrom |

## Patentansprüche

1. Verfahren zum Erzeugen und Reinigen eines Synthesegasstromes, aufweisend die Schritte:
- Erzeugen eines CO- und H₂-haltigen Synthesegasstroms (S) aus einem kohlenwasserstoffhaltigem Einsatz (5) in einer Gaserzeugungseinheit (4),
- Abscheiden (1) von zumindest CO₂ aus dem Synthesegasstrom (S), und
- kryogenes Abtrennen (6) von CO aus dem Synthesegasstrom (S),
**dadurch gekennzeichnet, dass** CO2, das mit einer Konzentration im Bereich von 5 Vol.-% bis 30 Vol.-% im Synthesegasstrom (S) vorliegt, mittels einer Temperaturwechseladsorption (1) aus dem Synthesegasstrom (S) stromauf der kryogenen Abtrennung von CO auf weniger als 10 Vol.-ppm abgereichert wird, wobei an einem Adsorbens adsorbiert wird, und wobei das Adsorbens beim Adsorbieren (1) von CO2 mittels indirekter Wärmeübertragung vom Adsorbens auf das Wärmeträgermedium gekühlt wird und das mit beladene Adsorbens zur Desorption von CO₂ zumindest teilweise durch indirekte Wärmeübertragung von einem Wärmeträgermedium auf das Adsorbens erwärmt wird, wobei das adsorbierte CO₂ bei einem Druck im Bereich von 5 bar bis 90 bar, bevorzugt 15 bar bis 60 bar desorbiert wird und in die Gaserzeugungseinheit (4) als Edukt zur Synthesegaserzeugung zurückgeführt wird.

2. Verfahren nach Anspruch 1, **dadurch gekennzeichnet, dass** das Adsorbens als regellose Adsorbensschüttung ausgebildet ist.

3. Verfahren nach einem der vorhergehenden Ansprüche, **dadurch gekennzeichnet, dass** das CO2 mittels der Temperaturwechseladsorption (1) auf weniger als 1 Vol.-ppm, insbesondere weniger als 0,1 Vol.-ppm abgereichert wird.

4. Verfahren nach einem der vorhergehenden Ansprüche, **dadurch gekennzeichnet, dass** der Synthesegasstrom (S) unter einem Druckbereich von 10 bis 50 bar der Temperaturwechseladsorption (1) eingeführt wird.

5. Verfahren nach einem der vorhergehenden Ansprüche, **dadurch gekennzeichnet, dass** stromab der Temperaturwechseladsorption (1) eine weitere Temperaturwechseladsorption (3) durchgeführt wird, um im Synthesegasstrom (S) noch vorhandenes CO₂ aus dem Synthesegasstrom (S) abzutrennen, wobei CO₂ an einem Adsorbens adsorbiert wird, und wobei das mit CO₂ beladene Adsorbens zur Desorption von CO₂ mit einem Regeneriergas beaufschlagt wird, so dass Wärme des Regeneriergases direkt auf das Adsorbens übertragen wird.

## Claims

1. Method for generating and purifying a synthesis gas stream, having the steps of:
- generating a CO- and H₂-containing synthesis gas stream (S) from a hydrocarbon-containing insert (5) in a gas generating unit (4),
- separating (1) at least CO₂ from the synthesis gas stream (S), and
- cryogenically separating (6) CO from the synthesis gas stream (S), **characterized in that**
CO2, which is present at a concentration in the range of 5 vol% to 30 vol% in the synthesis gas stream (S), is depleted to less than 10 vol. ppm by means of a temperature change adsorption (1) from the synthesis gas stream (S) upstream of the cryogenic separation of CO, wherein CO₂ is adsorbed at an adsorbent, and wherein upon adsorption (1) of CO₂ the adsorbent is cooled by means of indirect thermal transfer from the adsorbent to the thermal transfer medium, and the adsorbent charged with CO₂ is at least partially heated via indirect thermal transfer from a thermal transfer medium to the adsorbent for desorption of CO₂, wherein the adsorbed CO₂ is desorbed at a pressure ranging from 5 bar to 90 bars, preferably 15 bar to 60 bar, and is returned into the gas generating unit (4) as an educt for the generation of synthesis gas.

2. Method according to claim 1, **characterized in that** the adsorbent is designed as an irregular adsorbent fill.

3. Method according to one of the preceding claims, **characterized in that** the CO₂ is depleted by means of the temperature change adsorption (1) to less than 1 vol. ppm, in particular less than 0.1 vol. ppm.

4. Method according to one of the preceding claims, **characterized in that** the synthesis gas flow (S) is introduced to the temperature change adsorption (1) at a pressure range of 10 to 50 bar.

5. Method according to one of the preceding claims, **characterized in that** a further temperature swing adsorption (3) is performed downstream of the temperature swing adsorption (1), in order to separate CO₂ still present in the synthesis gas stream (S) from the synthesis gas stream (S), wherein CO₂ is adsorbed at an adsorbent, and wherein for desorption of CO₂ the adsorbent charged with CO₂ is charged with a regeneration gas, such that heat of the regeneration gas is transferred directly to the adsorbent.

## Revendications

1. Procédé de production et de nettoyage d'un flux de gaz de synthèse, présentant les étapes de :
- production d'un flux de gaz de synthèse (S) contenant du CO et du H₂ à partir d'un insert (5) contenant des hydrocarbures dans une unité de production de gaz (4),
- séparation (1) au moins de CO₂ du flux de gaz de synthèse (S), et
- séparation cryogénique (6) de CO du flux de gaz de synthèse (S), **caractérisé en ce que**
du CO2, qui se trouve à une concentration située dans la plage de 5 % en volume à 30 % en volume dans le flux de gaz de synthèse (S), est appauvri dans le flux de gaz de synthèse (S) à moins que 10 ppm en volume au moyen d'une adsorption par température alternée (1) en amont de la séparation cryogénique de CO, du CO₂ étant adsorbé sur un adsorbant, l'adsorbant étant refroidi au moyen de transfert de chaleur indirect de l'adsorbant au milieu caloporteur lors de l'adsorption (1) de CO₂ et l'adsorbant chargé de CO₂ étant au moins partiellement chauffé par le transfert de chaleur indirect d'un milieu caloporteur à l'adsorbant pour la désorption de CO₂, le CO₂ adsorbé étant désorbé à une pression située dans la plage de 5 bars à 90 bars, de préférence de 15 bars à 60 bars, et étant renvoyé dans l'unité de production de gaz (4) comme produit de départ pour la production de gaz de synthèse.

2. Procédé selon la revendication 1, **caractérisé en ce que** l'adsorbant est conçu comme un adsorbant en vrac aléatoire.

3. Procédé selon l'une quelconque des revendications précédentes, **caractérisé en ce que** le CO₂ est appauvri à moins de 1 ppm en volume, en particulier à moins de 0,1 ppm en volume, au moyen de l'adsorption par température alternée (1).

4. Procédé selon l'une quelconque des revendications précédentes, **caractérisé en ce que** le flux de gaz de synthèse (S) est introduit à l'adsorption par température alternée (1) à une pression située dans la plage de 10 à 50 bars.

5. Procédé selon l'une quelconque des revendications précédentes, **caractérisé en ce que,** en aval de l'adsorption par température alternée (1), une autre adsorption par température alternée (3) est effectuée, pour séparer du flux de gaz de synthèse (S) du CO₂ se trouvant encore dans le flux de gaz de synthèse (S), le CO₂ étant adsorbé sur un adsorbant, et l'adsorbant chargé de CO₂ étant soumis à un gaz de régénération pour la désorption de CO₂, de telle sorte que la chaleur du gaz de régénération soit transférée directement à l'adsorbant.
